# EUROPÄISCHE PATENTSCHRIFT

(11) **EP 1 136 250 B1**
(45) Veröffentlichungstag und Bekanntmachung des Hinweises auf die Patenterteilung: **09.06.2004**
(21) Anmeldenummer: 01250084.9
(22) Anmeldetag: 13.03.2001
(51) Int. Cl.: B31F 1/28, B32B 31/00

(54) **Verfahren und Vorrichtung zum Zusammenkleben von aufeinanderzubewegten Bahnen aus blattartigem Fasermaterial wie Papier**
Method and device for glueing together webs of fibrous sheet material, such as paper
Procédé et dispositif pour coller des bandes d'un matériau en feuille fibreux, comme papier

(30) Priorität: 14.03.2000 DE 20005220 U
(43) Veröffentlichungstag der Anmeldung: 26.09.2001
(73) Patentinhaber: Smurfit Europa Carton GmbH, 22047 Hamburg (DE)
(72) Erfinder: Krause, Norbert, 41066 Mönchengladbach (DE); Krause, Horst, 41066 Mönchengladbach (DE)
(74) Vertreter: Patentanwälte Wenzel & Kalkoff

(56) Entgegenhaltungen:
- CH-A- 605 100
- DE-A- 19 603 015
- US-A- 1 957 732
- US-A- 5 372 494
- PATENT ABSTRACTS OF JAPAN vol. 005, no. 174 (M-096), 10. November 1981 (1981-11-10) & JP 56 101833 A (TOKIWA LEATHER KOGYO KK), 14. August 1981 (1981-08-14)

## Beschreibung

Die Erfindung betrifft ein Verfahren zum Zusammenkleben von aufeinanderzu bewegten Bahnen aus blattartigem Fasermaterial wie Papier, wobei die Bahnen flächig zusammengeführt und aneinandergeklebt werden, indem auf die Flächenseite wenigstens einer ersten Bahn Klebemittel aufgetragen wird und die Flächenseite einer zweiten Bahn zur Klebeanlage an die Flächenseite der ersten Bahn gebracht wird. Die Erfindung betrifft auch eine Vorrichtung zum Zusammenkleben von aufeinanderzu bewegten Bahnen aus blattartigem Fasermaterial wie Papier zum Ausführen des Verfahrens, umfassend eine Klebeeinrichtung zum Auftragen von Klebemittel auf die eine Flächenseite einer ersten Bahn und eine Führungseinrichtung zur flächigen Bahnzusammenführung, wobei eine zweite Bahn mit ihrer einen Flächenseite an der mit Klebemittel versehenen Flächenseite der ersten Bahn zu liegen kommt. Zudem bezieht sich die Erfindung auf eine Vorrichtung zum Herstellen von Wellpappe durch Zusammenkleben von zwei bewegten Bahnen mittels der Klebevorrichtung, Bilden einer Wellenbahn aus der zusammengeklebten Verbundbahn und Verbinden der Wellenbahn mit wenigstens einer weiteren, insbesondere glatten Bahn.

In bekannten Klebevorrichtungen wird eine erste Papierbahn mit feuchtigkeitshaltigem, nämlich wasserhaltigem Leim bestrichen, um mit einer zweiten glatten Bahn flächig zusammengeklebt zu werden. Insbesondere werden die beiden Bahnen zum Erreichen der Verklebung über einen Heizzylinder geführt, damit der zwischen den Bahnen befindliche Leim zur fertigen Verklebung mit erforderlicher Verkleisterungstemperatur beaufschlagt wird. Insbesondere bei Bahnbreiten von einigen Metern und/oder relativ großen Produktionsgeschwindigkeiten, die bereits ab ca. 70 m/min als kritisch anzusehen sind, bilden sich zwischen den Bahnen Gasblasen, die durch im Leim verdampfendes Wasser entstehen und zu Verwerfungen, Materialblasen oder -beulen führen. Diese nachteiligen Effekte entstehen insbesondere im Bereich des Heizzylinders, können aber auch bereits im Bereich vor diesem bzw. beim Zusammenführen der mit Leim versehenen Bahn mit der leimfreien Bahn auftreten. Insbesondere sind Folgen, daß die Verbundbahn aufquillt, ihre Planheit oder Glätte unzureichend ist und/oder die Materialstärke der Verbundbahn schwankt, wodurch das Produkt, insbesondere als Vorprodukt, minderwertig oder unbrauchbar wird. Besonders in Anlagen zum Herstellen einseitiger Wellpappe, wie sie z.B. aus DE 196 03 015 bekannt sind, kommt es zu Produktionsausfall, Ausschuß und gegebenenfalls Reparaturen, die zumeist nicht nur zeitaufwendig, sondern auch mit besonderen Reinigungsarbeiten und gegebenenfalls dem Ersatz von Maschinenteilen verbunden sind. In jedem Fall kommt es zum Maschinenstillstand und zu erheblichen Folgekosten. Das Entstehen einer insbesondere am Heizzylinder fortlaufenden Dampfblase behindert allgemein die Verklebung beider Bahnmaterialien, wobei der Leim nicht in dem erforderlichen Maß gelieren kann.

In Wellpappe-Herstellungsvorrichtungen passiert die Laminatbahn Riffelwalzen zum Erzeugen von Wellen an der Pappe- bzw. Papierbahn. Während einer solchen Prägung reißen bereits kleine, durch Feuchtigkeits- und/oder Gaseinschluß entstehende Blasen auf, die an der Bahn zumeist doppelseitig entstehen. Leim gelangt auf die Riffelwalzen. Auch kann Leim bei unvollständiger Verklebung durch das Bahnmaterial bei insbesondere großer Bahngeschwindigkeit gedrückt werden. Leimaustritt an der Bahn führt nicht nur dazu, daß die Bahn an Walzen kleben bleibt, sondern es werden auch Saugöffnungen von Walzen verstopft.

Der Erfindung liegen die Ziele zugrunde, ein Verfahren und eine Vorrichtung zum verbesserten Zusammenkleben von aufeinanderzu bewegten Bahnen aus blattartigem Fasermaterial wie Papier zu schaffen, wobei, insbesondere auch bei großflächigem Zusammenkleben der Bahnen, mit flächig aufgebrachter Klebeschicht ein homogenes, Fehlstellen in der Verklebung vermeidendes, insbesondere die Verklebung beschleunigendes flächiges Zusammenkleben der Bahnen gewährleistet sein soll. Insbesondere soll das Bahnklebelaminat (Verbundbahn) mit großer Produktionsgeschwindigkeit herstellbar sein. Das Verfahren bzw. die Klebevorrichtung sollen hauptsächlich die Herstellung von aus einer Verbundbahn geprägter Wellpappe verbessern.

Die Ziele der Erfindung werden in Verbindung mit den Merkmalen des eingangs genannten Verfahrens dadurch erreicht, daß wenigstens eine der beiden Bahnen in Form einer Bahn, die mit einer Mehrzahl zunächst klebemittelfreier, lochartiger Öffnungen versehen ist, mit dem Klebemittel flächig in Berührung gebracht wird und zur Klebeanlage zusammen mit der anderen Bahn geführt wird, wobei die Öffnungen derart sind, daß fluide Bestandteile der zwischen den aneinanderliegenden Bahnen entstehenden Klebeverbindung entweichen. Mit einer besonders angepaßten Klebevorrichtung zur Verfahrensausführung, umfassend eine Klebeeinrichtung zum Auftragen von Klebemittel auf die eine Flächenseite einer ersten Bahn und eine Führungseinrichtung zur flächigen Bahnzusammenführung, wobei eine zweite Bahn mit ihrer einen Flächenseite an der mit Klebemittel versehenen Flächenseite der ersten Bahn zu liegen kommt, werden die Ziele dadurch erreicht, daß die Vorrichtung eine Durchlochungseinrichtung aufweist, die an der klebemittelfreien, noch nicht mit der ersten Bahn zusammengeführten zweiten Bahn angeordnet und derart ausgebildet ist, daß sie an der klebemittelfreien zweiten Bahn eine Mehrzahl lochartiger Öffnungen herstellt, die als solche vorgesehen sind, um fluide Bestandteile der zwischen den aneinanderliegenden Bahnen entstehenden Leimverbindung entweichen zu lassen. Das Vorsehen bzw. die Anbringung lochartiger Bahnöffnungen bleibt aufgrund der erfindungsgemäßen Maßnahmen ohne Beeinträchtigung durch Klebe-/Verbundmittel. Die Bahndurchlochung beeinträchtigt auch die zu bildende Verbundbahn oder Teile derselben nicht. Bereits beim Herstellen des Bahnklebelaminats, nachdem nämlich die gelochte Bahn zur Klebeanlage an die andere Bahn kommt, entweichen Gas und/oder Flüssigkeitsbestandteile der flüssigkeits-/wasserhaltigen Klebeverbindung, und zwar bevor Blasen od.dgl. Störungen entstehen.Es resultiert eine relativ schnelle, vollständige und homogene Verklebung. Die Oberfläche des Bahnenlaminats ist glatt und plan. Man erhält eine ganze Reihe von weiteren Vorteilen. Es lassen sich Bahnen mit relativ großer Breite verarbeiten. Die Produktionsgeschwindigkeit kann erheblich gesteigert werden. Es können Papiere geringerer Qualität verarbeitet werden als in herkömmlichen Vorrichtungen. Das Bahnenlaminat (geklebte Verbundbahn) eignet sich besonders als Material zum Beschicken einer Vorrichtung zum Herstellen von Wellpappe. Auch eine solche Wellpappe-Herstellungsvorrichtung kann mit erheblich höherer Geschwindigkeit als bisher betrieben werden. Verschleiß und Beschädigung der Wellpappeanlage durch herkömmlich auftretenden Leimaustritt an der Bahn sind beseitigt, und die Betriebstechnik der Wellpappeanlage, zum Beispiel die Saugandrückung zu bearbeitender Bahnen an Walzen, kann in verbessertem Maß genutzt werden. Die Wahl von Klebstoffen und/oder die Klebstoffeinstellung sind vereinfacht. Es ist gefunden worden, daß die erfindungsgemäß vorgesehene Durchlochung als solche die Qualität des Bahnlaminats nicht beeinträchtigt. Die lochartigen Öffnungen sind nach dem Verkleben wieder geschlossen, und auch die Stabilität des Laminats bzw. der daraus hergestellten Wellpappe erfährt keine Minderung. Es hat sich herausgestellt, daß insbesondere der Kantenstauchdruck, die Durchstoßfestigkeit sowie die Flammstandfestigkeit der Papierprodukte nicht beeinträchtigt werden. Aufgrund der erfindungsgemäßen Maßnahmen lassen sich Kostenvorteile insbesondere dadurch erzielen, daß Maschinenstillstand vermieden und die Herstellungsgeschwindigkeit erheblich gesteigert wird.

Auf anderem technischem Gebiet, das die Herstellung von Kunststoff-/Kunstharz-Flächenprodukten betrifft, ist es bekannt (z.B. US 1 957 732), Feinmaterial auf ein Träger-Flächensubstrat aufzubringen und in diesem Zwischenprodukt Blasen nach ihrer Entstehung durch Löcher zu beseitigen, die mittels Stachelwalze an dem wenigstens teilweise bereits laminierten Produkt erzeugt werden. Dabei durchstechen Stacheln auch das Trägersubstrat. Derartige bekannte Maßnahmen kommen für die Ziele der Erfindung nicht in Betracht, da es erfindungsgemäß darauf ankommt, vor dem Zusammenlaufen von zwei Bahnen einfach, ohne Eingriff in die Verbundbahn und präzise feinste Öffnungen vorzusehen, die die Klebeverbindung der beide Bahnen ohne Qualitätsbeeinträchtigung unter Vermeidung von Blasenbildung erheblich verbessern.

In bevorzugter Erfindungsgestaltung wird auf die erste, als lochfreie Bahn vorgesehene Bahn Klebemittel aufgetragen und die zweite Bahn mit lochartigen Öffnungen klebemittelfrei zur Klebeanlage an die erste Bahn geführt. Dies hat den besonderen Vorteil, daß die Öffnungen klebemittelfrei sind, wenn die beiden Bahnen zur Klebeanlage kommen. Im Rahmen der Erfindung ist es aber auch möglich, eine klebemittelfreie, Öffnungen aufweisende Bahn zunächst flächig mit Klebemittel zu bestreichen und dann zur Klebeanlage an die andere Bahn zu bringen, wobei es gegebenenfalls sogar zweckmäßig ist, daß jede der beiden zur Klebeanlage zu bringenden Bahnen mit lochartigen Öffnungen versehen ist.

Ebenfalls in bevorzugter Erfindungsgestaltung wird die eine klebemittelfreie Bahn zunächst in Form einer durchlochungsfreien Bahn an die erste Bahn herangeführt und dann, bevor sie zur Klebeanlage an die erste Bahn gebracht wird, mit den lochartigen Öffnungen versehen. Dabei ist es besonders vorteilhaft, die lochartigen Öffnungen unmittelbar vor der Flächenzusammenführung der beiden Bahnen in die klebemittelfreie Bahn einzubringen. Die Durchlochung an einem Bahnabschnitt in der Klebevorrichtung, vorteilhaft unmittelbar vor der Bahnzusammenführung, ist zur Bildung von Feinstöffnungen besonders sicher und präzise. Andererseits ist es im Rahmen der Erfindung auch möglich, eine außerhalb des Klebeverfahrens vorgefertigte, mit den lochartigen Öffnungen versehene Bahn zu verwenden.

Das erfindungsgemäße Verfahren wird besonders vorteilhaft und zweckmäßig zum Herstellen von Wellpappe genutzt, indem wenigstens zwei zur Verbundbahn zusammengeklebte Bahnen zur Herstellung der Wellpappe durch Prägung gewellt werden, wobei vorzugsweise an eine mit den lochartigen Öffnungen versehene Bahn eine die gewellte Verbundbahn abdeckende Bahn angeklebt wird.

In besonderer Gestaltung der Erfindung wird die Durchlochungseinrichtung der Klebevorrichtung durch eine sich drehende Walze mit am Walzenmantel hervorstehenden, in die zweite Bahn eingreifenden Durchstoßelementen gebildet. Die Durchstoßelemente werden zweckmäßig und vorteilhaft als stift- oder nagelförmige Elemente mit ausgeprägten nadelartigen Spitzen derart vorgesehen, daß bei der Lochherstellung sehr feine Löcher ohne Lochaufweitung entstehen. Nur feine Stiftspitzen stellen Löcher in der klebemittelfreien Bahn her. Es werden im Vergleich zur Bahnfläche nur winzige, porenartige Luftlöcher erzeugt, die sich bei der Verarbeitung glatt schließen. - Es ist an sich bekannt, Durchstoßelemente lösbar an einer Walze zu befestigen (US 5 372 494). Eine derartige Befestigung bietet für eine erfindungsgemäße Vorrichtung besondere Vorteile hinsichtlich Reinigung, Musterstruktur der Durchlochung sowie der Walzenfertigung. Eine bevorzugte erfindungsgemäße Gestaltung besteht darin, die Durchstoßelemente, insbesondere in Form von spitzen Nägeln, gruppenweise an Sockelelemente bildenden Leisten zu verankern, die in formschlüssiger Verbindung vorteilhaft in Nut/Feder- und Schraubverbindung an dem Mantel der Walze befestigt sind. Gerade für die Zwecke der Erfindung besonders vorteilhaft vorgesehene feine Stiftspitzen, die praktisch ohne Schafterweiterung nur mit der eigentlichen Spitze ohne Lochaufweitung die Öffnung erzeugen, lassen sich mit den genannten Maßnahmen präzise in Radial- und/oder Längsrichtung des Walzenkörpers positionieren und justieren.

Eine besondere Ausgestaltung der Erfindung besteht darin, die Einrichtung zum Zusammenführen von zusammenzuklebenden Bahnen und eine mit Durchstoßelementen versehenen Umlenkwalze, die die Durchlochungseinrichtung bildet, in Kombination als Vorrichtungseinheit vorzusehen.

In besonders vorteilhafter Erfindungsgestaltung umfaßt die Klebevorrichtung eine zweckmäßig als Heizwalze ausgebildete Heizeinrichtung, die zur Wärme-Klebeverbindung von zwei mittels Leim aneinanderliegenden Bahnen vorgesehen ist. In der Phase der Verklebung der Bahnen im Bereich der Heizwalze, die zweckmäßig als Vorheizzylinder angeordnet ist, findet eine gezielte Verdunstung der Leimflüssigkeit statt. Das durch Verdampfung entstehende Gas, das die Verklebung zwischen den Bahnen beeinträchtigt, wird mittels der Durchlochung besonders wirksam abgeführt. Besonders zweckmäßig ist es, die Heizeinrichtung so auszubilden und anzuordnen, daß die lochfreie Bahn der zur Klebung zusammengeführten Bahnen in einem Walzenanlagebereich an der Heizwalze anliegt. Durch die resultierende Außenführung der gelochten Bahn kann der entstehende Wasserdampf besonders wirksam entweichen, so daß die Verklebung besonders homogenisiert und beschleunigt wird.

Unteransprüche sind auf die genannten und noch andere zweckmäßige und vorteilhafte Ausgestaltungen der Erfindung gerichtet. Besonders zweckmäßige und vorteilhafte Ausbildungsformen oder -möglichkeiten der Erfindung werden anhand der folgenden Beschreibung der in der schematischen Zeichnung dargestellten Ausführungsbeispiele näher beschrieben. Es zeigen
- Fig. 1: in schematischer Seitenansicht eine erfindungsgemäße Wellpappe-Herstellungsvorrichtung, die als einseitige Wellpappemaschine arbeitet, zur Ausführung des erfindungsgemäßen Verfahrens,
- Fig. 2: in axonometrischer Ansicht die Nagelwalze einer erfindungsgemäß vorgesehenen Durchlochungseinrichtung,
- Fig. 3 und 4: in Stirnansicht bzw. explosionsartiger Darstellung die Nagelwalze gemäß Fig. 2,
- Fig. 5: im Längsquerschnitt die Struktur einer einseitigen Wellpappe, hergestellt mit einer mit einer erfindungsgemäßen Vorrichtung ausgestatteten Wellpappemaschine und
- Fig. 6: eine nach dem erfindungsgemäßen Verfahren und in der erfindungsgemäßen Klebevorrichtung erzeugte durchlöcherte Bahn.

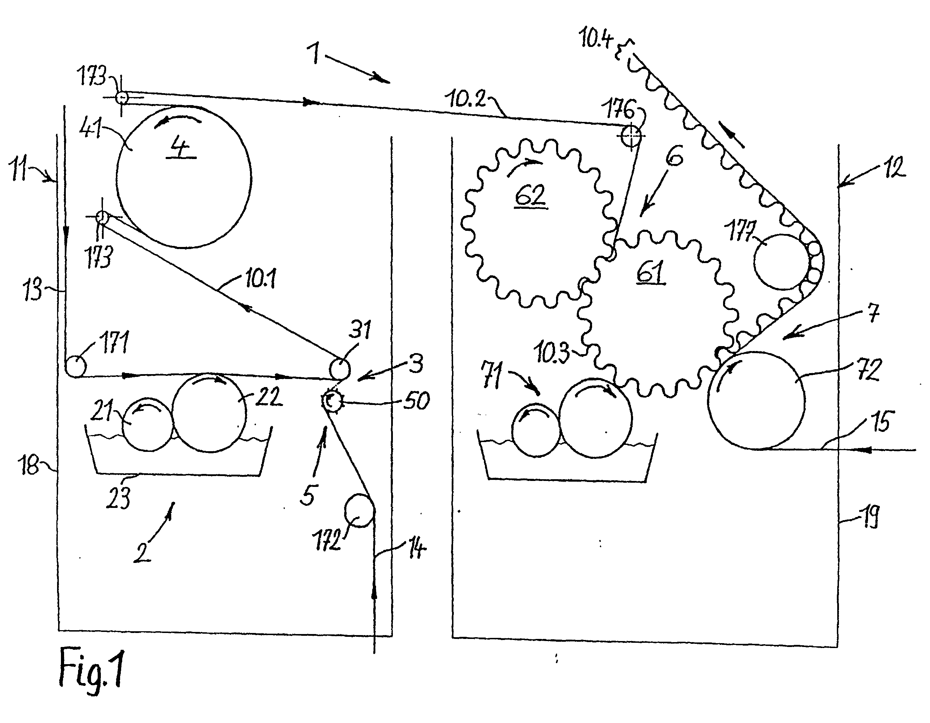

Eine im folgenden als Wellpappemaschine bezeichnete Wellpappe-Herstellungsvorrichtung 1 gemäß Fig. 1 umfaßt eine Laminiervorrichtung 11 zum Zusammenkleben von aufeinanderzu bewegten Bahnen 13, 14 und eine nachgeordnete Well- und Deckvorrichtung 12. Die Vorrichtung 11 umfaßt eine Leimeinrichtung 2, die der Bahn 13 (erste Bahn) zugeordnet ist. Letztere ist lochfrei und wird durch flächigen Auftrag mit Leim als Klebemittel versehen. Die Laminier- oder Klebevorrichtung 11 ist erfindungsgemäß mit einer Durchlochungseinrichtung 5, die der Bahn 14 (zweite Bahn) zugeordnet ist, ausgestattet. Eine Führungseinrichtung 3 der Vorrichtung 11 führt die beiden Bahnen 13, 14 flächig zusammen, und eine nachgeordnete Heizeinrichtung 4 der Vorrichtung 11 ist durch eine rotierende Heizwalze 41 gebildet, an der längs eines rotierenden Umfangsabschnitts die zusammengeführten Bahnen 13, 14 als Doppelbahn 10.1 anliegen. Die Einrichtungen 2, 3, 4 und 5 sind an einem nur schematisch dargestellten Maschinengestell 18 der Laminiereinrichtung 11 angeordnet. Die Bahnen werden mit üblichen, nicht dargestellten Antrieben durch die Vorrichtung bzw. Einrichtungen bewegt.

Die Breite der zu verarbeitenden Bahnen 13, 14 kann mehrere Meter betragen. Die beiden zur Deckung gebrachten Bahnen sind zum Beispiel 2,5 m breit. Dabei werden die Bahnen 13, 14 zwischen den genannten Einrichtungen mit Umlenkwalzen, die sich mit parallelen Achsen erstrecken,umgelenkt.

Die Bahnen 13, 14 sind glatte Papierbahnen, die mittels der Laminiervorrichtung 11 flächig zusammengeklebt werden, um eine zunächst glatte Laminat-Verbundbahn 10.2 zu erzeugen. Diese wird zur Herstellung von einseitig gedeckter Wellpappe 10.4 in der Vorrichtung 12 mit über die Bahnbreite durchgehenden Wellen versehen. Die dadurch gebildete doppellagige Wellenbahn 10.3 wird mit einer glatten Papier-Deckenbahn 15 abgedeckt.

Im folgenden wird ein Ausführungsbeispiel des erfindungsgemäßen Verfahrens in Ausführung mittels der ebenfalls als Ausführungsbeispiel beschriebenen Vorrichtung beschrieben.

In der Laminiervorrichtung 11 wird die erste Bahn 13 in einem Bereich zwischen Umlenkwalzen 171, 31, in dem die erste Bahn 13 im wesentlichen horizontal geführt ist, an ihrer Unterfläche vollflächig mit wäßrigem Naßleim mittels der Leimeinrichtung 2 bestrichen. Die vorgesehene übliche Leimeinrichtung 2 umfaßt eine Doktorwalze 21, mit der Leim an eine Leimwalze 22 dosierend angetragen und mit letzterer auf die erste Bahn 13 übertragen wird. Die zweite Bahn 14 wird über eine Umlenkwalze 172 und mittels der Führungseinrichtung 3 zum Verkleben mit der Bahn 13 an deren flächig mit Leim bestrichene Fläche herangeführt. Die Führungseinrichtung 3 umfaßt eine Umlenkwalze 31 sowie eine dieser vorgeordnete und benachbarte Umlenkwalze 50. Die beiden Walzen 31, 50 sind so angeordnet, daß sie die zweite Bahn 14 S-förmig führen. Dabei wird die Bahn 14 an der Walze 31 zur Anlage an die an dieser Walze 31 innengeführte, mit Leim bestrichene Bahn 13 gebracht wird. Die gebildete Doppelbahn 10.1 wird über eine Umlenkwalze 173 der Heizeinrichtung 4 zugeführt.

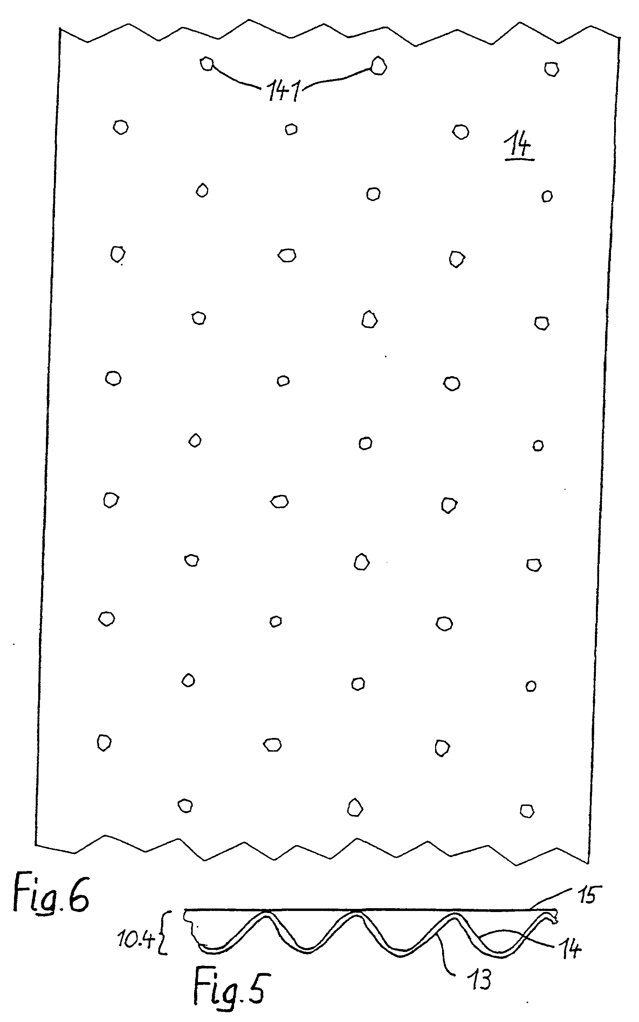

Die Walze 50 ist Bestandteil der erfindungsgemäß vorgesehenen Durchlochungseinrichtung 5. So ist die Walze 50 als rotierende Nagelwalze ausgebildet, die mitlaufend ohne eigenen Antrieb angeordnet ist und die leimfrei und durchlochungsfrei zugeführte, an die erste Bahn 13 herangeführte zweite Bahn 14 unmittelbar vor dem Zusammenlauf mit letzterer, also räumlich und zeitlich unmittelbar vor der Klebeanlage der beiden Bahnen 13, 14 durchlöchert. Ein Beispiel des erzeugten Loch- oder Perforationsmusters ist in Fig. 6 dargestellt. Es werden relativ winzige, porenartige Löcher hergestellt, die in Fig. 6 überproportional groß dargestellt sind. Die Löcher 141 liegen in gedachten, zum Bahnverlauf diagonalen Linien mit gleichen Abständen, wobei die Löcher 141 auch in mit den Bahnrändern parallelen (gedachten) Linien gleich beabstandet angeordnet sind, so daß ein Muster entsteht, daß durch eine rhombusartige Feldordnung bestimmt ist.

Man erkennt in Fig. 1, daß die Nagelwalze 50 so angeordnet ist, daß ihre Durchstoßelemente bildenden spitzen Nägel 52 die Bahn 14 auf der Flächenseite bzw. von der Flächenseite her durchstoßen, die der mit Leim bestrichenen Seite der ersten Bahn 13 abgewandt ist. Infolgedessen kommt der durch die Walzennägel 52 gerissene, wulstartige bzw. aufgeworfene Papierrand zwischen den Bahnen 13, 14 im Bereich der an die erste Bahn 13 angetragenen Leimschicht zu liegen. Es ist gefunden worden, daß derart erzeugte Porenlöcher beim Fertigstellen der doppellagigen Laminierbahn zum besonders glatten Schließen der Löcher 141 führen.

Soweit beim Zusammenführen der beiden Bahnen 13, 14 in der Führungseinrichtung 3 zwischen den Bahnen Luft eingezogen wird, wird diese durch die Löcher 141 abgeführt oder, soweit es überhaupt zu Lufteinschlüssen kommt, werden diese mittels erfindungsgemäß vorgesehener Löcher abgebaut. Wesentlich ist, daß herkömmlich auftretende fortlaufende Dampfblasen von vornherein vermieden werden. Erfindungsgemäß entweichen fluide, in Laufrichtung der Doppelbahn 10.1 hinter der Führungseinrichtung 3 in der Phase der Verklebung auftretende Bestandteile. Der die Leimverbindung homogenisierende Effekt der Löcher 141 kommt besonders in einer Vorrichtung zur Geltung, die, wie im Ausführungsbeispiel, mit einer Heizeinrichtung in Form einer rotierenden Zylinderwalze versehen ist. Wie aus Fig. 1 ersichtlich, wird die Doppelbahn 10.1 entlang eines rotierenden Umfangbereichs zur Anlage an die Heizwalze 41 der Heizeinrichtung 4 gebracht. Zweckmäßig wird ein relativ großer, mehr als 180° aufweisender Umschlingungswinkel vorgesehen. Dabei ist wesentlich, daß die Heizwalze 41 mit einem Paar von Umlenkwalzen 173 so angeordnet ist, daß die lochfreie Bahn 13 der Doppelbahn 10.1 unmittelbar an dem rotierenden Walzenabschnitt anliegt, während die Lochbahn 14 außen zu liegen kommt, um fluide Komponenten der Verleimung besonders wirksam abzuführen und damit das Fertigstellen der Leimverbindung an der Heizwalze zu begünstigen. An der Heizwalze 41 werden, in Abhängigkeit von dem verwendeten Leim, Temperaturen von z.B. 50° und mehr zum Aktivieren der Verleimung erzeugt. Durch die erfindungsgemäß hergestellte Lochstruktur der zweiten Bahn 14 wird von vornherein vermieden, daß entstehender Wasserdampf zu einer gegebenenfalls zwischen den Bahnen 13, 14 fortlaufenden Dampfblase führt.

Man erkennt, daß es gemäß Ausführungsbeispiel wesentlich darauf ankommt, daß auf die erste, zunächst leimfreie Bahn 13 Leim flächig aufgetragen wird und die zweite Bahn 14 mit den lochartigen Öffnungen 141 klebemittelfrei zur Klebeanlage an die erste Bahn 13 geführt wird. Dabei wird die zweite zunächst noch durchlochungsfreie Bahn 14 an die erste Bahn 13 herangeführt und dann, bevor sie zur Klebeanlage an die erste Bahn 13 gebracht wird, mit den lochartigen Öffnungen 141 versehen. Die zweite Bahn 14 wird mittels der beiden Walzen 31, 50 in einem Bereich, der durch einen der Bahnzusammenführung unmittelbar vorausgehenden Wegabschnitt und einen sich daran unmittelbar anschließenden Wegabschnitt der aneinanderliegenden Bahnen 13, 14 bestimmt ist, S-förmig geführt.

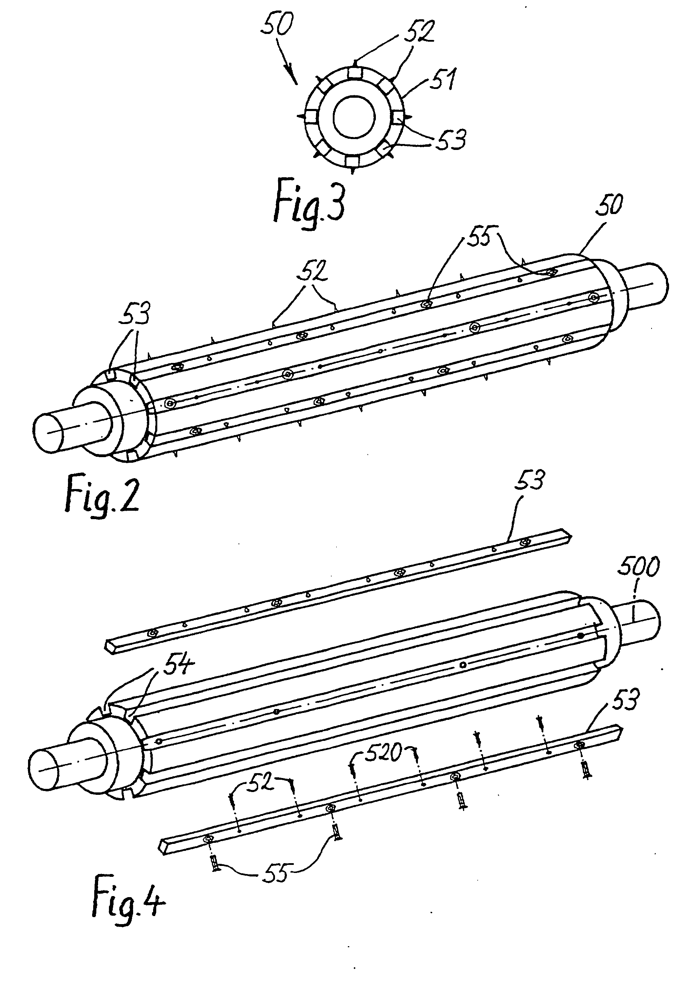

Wie aus Fig. 2 bis 4 ersichtlich, wird die Nagelwalze 50 zweckmäßig als Welle ausgeführt, die in einer nicht-dargestellten Lagereinrichtung drehbar gelagert ist. Am Walzenmantel 51 sind längsachsenparallele Paßnuten 54 in einem Umfangswinkelabstand von 45° eingearbeitet. Diese Längsnuten erstrecken sich parallel zur Walzenachse 500 über die Länge des Walzenmantels 51 und sind vorgesehen, um zugeordnete formgleiche Leisten 53 als Federelemente im Paßsitz aufzunehmen. Diese Leisten 53 bilden keilartige Sockelelemente, die die Nägel 52 der Walze 50 verankern.

Wie aus Fig. 4 ersichtlich, werden die Nägel 52, in Radialrichtung betrachtet, von innen nach außen durch Radialbohrungen gesteckt, die in gleichen Abständen an jeder Leiste 53 ausgebildet sind. Jeder Nagel 52 ist mit einer fußartigen Verdickung 520 versehen, die an der dem Walzenmantel 51 zugewandten Leistenseite einen den Nagel 52 unverlierbar haltenden Verankerungssitz herstellt. Jede Leiste 53 wird mit Schrauben 55 in Schraublöchem am Boden jeder Paßnut 54 befestigt. Aufgrund der form- und querschnittsgleichen Ausbildung der Leiste 53 mit der Nut 54 ist die Manteloberfläche der Walze 50 glatt, wobei die Schrauben 55 versenkt in die Leisten 53 eingelassen sind.

Die Nägel 52 stehen gleichmäßig an der Walzenoberfläche hervor. Jeder Nagel ist zweckmäßig mit einer nadelartigen Spitze versehen. Ein solches Durchstoßelement führt, wie gefunden worden ist, zu einer besonders vorteilhaften porenartigen Durchlöcherung mit in Durchstoßrichtung aufgeworfenen Lochrändern.

Man erkennt, daß die Nagelwalze 5 durch die Wahl bzw. den Austausch von Leisten 53 und/ oder Nägeln 52 einfach und wahlweise montiert werden kann, um Nagelanordnung und/oder -eigenschaft für ein gewünschtes Lochmuster in Anpassung an übrige Gegebenheiten zu erhalten. Bei einem Walzendurchmesser von 60 cm und einer Walzenlänge von ca. 250 cm ist es zum Beispiel zweckmäßig, daß der Längsabstand der Nägel 52 längs der Walze 50 ca. 25 cm beträgt.

Die Well-Deckvorrichtung 12 der Wellpappemaschine 1 kann in üblicher Weise ausgeführt sein. Aufgrund der Erfindung ist jedoch erreicht, daß eine solche Vorrichtung mit erheblich höherer Geschwindigkeit betreibbar ist. Auch können Bahnen mit relativ dünnen, gegebenenfalls minderwertigen Papieren durch Wellenprägung bearbeitet werden. Zum Beispiel lassen sich durchaus Bahngeschwindigkeiten in der Größenordnung von 100 m/min erzielen.

Im Ausführungsbeispiel gemäß Fig. 1 umfaßt die Well-/Deckvorrichtung 12 einlaufseitig eine Wellungseinrichtung 6 sowie eine nachgeordnet Deckbahn-Anklebeeinrichtung 7. Die Wellungseinrichtung 6 ist durch zwei gegensinnig umlaufende, achsparallele Riffelwalzen 61, 62 gebildet. Diese können zwecks Erhöhung der Elastizität der Papierbahn 10.2 mittels Dampf oder in anderer Weise beheizt werden. Die der gelochten Bahn 14 abgewandte Riffelwalze 61 weist Saugöffnungen in Form von nicht dargestellten, üblichen Vakuumschlitzen auf. Die Anklebeeinrichtung 7 umfaßt eine Leimeinrichtung 71, die der Leimeinrichtung 2 entspricht. Sie umfaßt zudem eine Führungswalze 72, die eine glatte Deckbahn 15 aus Papier an die gewellte Doppelbahn 10.3 heranführt. Die Einrichtungen 6 und 7 sind an einem schematisch dargestellten Rahmen oder Gestell 19 der Vorrichtung 12 angeordnet.

Die zusammengeklebte Doppelbahn 10.2 wird beim Einlauf in die Vorrichtung 12 um eine Umlenkwalze 176 geführt und tritt durch den Eingriffsbereich der beiden Riffelwalzen 61, 62 hindurch. Die infolgedessen mit Wellen versehene Doppelpapierbahn 10.3 wird mit innen geführter Bahn 13 um die unterhalb der Riffelwalze 62 angeordnete Riffelwalze 61 geführt. Die Leimeinrichtung 71 beleimt die Spitzen der Wellenbahn 10.3, also die Wellenberge der anderen, außen geführten Bahn 14. Daraufhin wird die Deckbahn 15 mittels der Führungswalze 72 an die Doppel-Wellenbahn 10.3 angeklebt.

Die Führungswalze 72 kann mittels Dampf in bekannter Weise beheizt werden. Die gereckt geführte, einseitig gedeckte Wellpappe-Bahn 10.4 verläßt die Vorrichtung 12 über eine Umlenkwalze 177.

## Patentansprüche

1. Verfahren zum Zusammenkleben von aufeinanderzu bewegten Bahnen (13, 14) aus blattartigem Fasermaterial wie Papier, wobei die Bahnen (13, 14) flächig zusammengeführt und aneinandergeklebt werden, indem auf die Flächenseite wenigstens einer ersten Bahn (13) Klebemittel aufgetragen wird und die Flächenseite einer zweiten Bahn (14) zur Klebeanlage an die Flächenseite der ersten Bahn (13) gebracht wird, **dadurch gekennzeichnet, daß** wenigstens eine der beiden Bahnen (13, 14) in Form einer Bahn (14), die mit einer Mehrzahl zunächst klebemittelfreier, lochartiger Öffnungen (141) versehen ist, mit dem Klebemittel flächig in Berührung gebracht wird und zur Klebeanlage zusammen mit der anderen Bahn (13) geführt wird, wobei die Öffnungen (141) derart sind, daß fluide Bestandteile der zwischen den aneinanderliegenden Bahnen (13, 14) entstehenden Klebeverbindung entweichen.

2. Verfahren nach Anspruch 1, **dadurch gekennzeichnet, daß** auf die erste, als lochfreie Bahn vorgesehene Bahn (13) Klebemittel aufgetragen wird und die zweite Bahn (14) mit lochartigen Öffnungen (141) klebemittelfrei zur Klebeanlage an die erste Bahn (13) geführt wird.

3. Verfahren nach Anspruch 2, **dadurch gekennzeichnet, daß** die zweite Bahn (14) zunächst in Form einer durchlochungsfreien Bahn an die erste Bahn (13) herangeführt wird und dann, bevor sie zur Klebeanlage an die erste Bahn (13) gebracht wird, mit den lochartigen Öffnungen (141) versehen wird.

4. Verfahren nach Anspruch 3, **dadurch gekennzeichnet, daß** die lochartigen Öffnungen (141) unmittelbar vor der Flächenzusammenführung der beiden Bahnen (13, 14) in die zweite Bahn (14) eingebracht werden.

5. Verfahren nach einem der Ansprüche 2 bis 4, **dadurch gekennzeichnet, daß** die zweite Bahn (14) in einem Bereich S-förmig geführt wird, der durch einen der Bahnzusammenführung unmittelbar vorausgehenden Wegabschnitt und einen sich daran unmittelbar anschließenden Wegabschnitt der aneinanderliegenden Bahnen (13, 14) bestimmt ist.

6. Verfahren nach einem der Ansprüche 1 bis 5, **dadurch gekennzeichnet, daß** die mittels Klebemittel aneinanderliegenden Bahnen (13, 14) zur Wärme-Klebeverbindung um eine Heizwalze (41) einer Heizeinrichtung vorzugsweise mit einem größer als 180° vorgesehenen Umschlingungswinkel geführt werden, wobei eine lochfreie erste Bahn (13) an der Umfangsfläche der Heizwalze (41) zur Anlage gebracht wird.

7. Verfahren nach einem der Ansprüche 1 bis 6, **dadurch gekennzeichnet, daß** zwei aneinanderzuklebende Bahnen (13, 14) so geführt werden, daß lochartige Bahnöffnungen (141) mit wulstartigen Rändern, die jeweils aus jeder Öffnung (141) freigebendem Bahnmaterial gebildet sind, der anderen Bahn (13) zugewandt sind.

8. Verfahren nach einem der Ansprüche 1 bis 7, **dadurch gekennzeichnet, daß** wenigstens zwei zur Verbundbahn (10.2) zusammengeklebte Bahnen (13, 14) zur Herstellung von Wellpappe durch Prägung gewellt werden, wobei vorzugsweise an eine mit den lochartigen Öffnungen (141) versehene Bahn (14) eine die gewellte Verbundbahn (10.2) abdeckende Bahn (15) angeklebt wird.

9. Vorrichtung (11) zum Zusammenkleben von aufeinanderzu bewegten Bahnen (13, 14) aus blattartigem Fasermaterial wie Papier zum Ausführen des Verfahrens nach einem der Ansprüche 2 bis 8, umfassend eine Klebeeinrichtung (2) zum Auftragen von Klebemittel auf die eine Flächenseite einer ersten Bahn (13) und eine Führungseinrichtung (3) zur flächigen Bahnzusammenführung, wobei eine zweite Bahn (14) mit ihrer einen Flächenseite an der mit Klebemittel versehenen Flächenseite der ersten Bahn (13) zu liegen kommt, **dadurch gekennzeichnet, daß** die Vorrichtung (11) eine Durchlochungseinrichtung (5) aufweist, die an der klebemittelfreien, noch nicht mit der ersten Bahn (13) zusammengeführten zweiten Bahn (14) angeordnet und derart ausgebildet ist, daß sie an der klebemittelfreien zweiten Bahn (14) eine Mehrzahl lochartiger Öffnungen (141) herstellt, die als solche vorgesehen sind, um fluide Bestandteile der zwischen den aneinanderliegenden Bahnen entstehenden Klebeverbindung entweichen zu lassen.

10. Vorrichtung nach Anspruch 9, **dadurch gekennzeichnet, daß** die Durchlochungseinrichtung (5) eine zur Herstellung der Durchlochung sich drehende Walze (50) mit am Walzenmantel (51) hervorstehenden, in die zweite Bahn (14) eingreifenden Durchstoßelementen (52) umfaßt.

11. Vorrichtung nach Anspruch 10, **dadurch gekennzeichnet, daß** die Durchstoßelemente (52) stiftförmige Elemente mit ausgeprägten nadelartigen Spitzen sind, die so ausgebildet sind, daß nur feine Stiftspitzen Löcher in der zweiten klebemittelfreien Bahn (14) herstellen.

12. Vorrichtung nach Anspruch 10 oder 11, **dadurch gekennzeichnet, daß** die Durchstoßelemente (52), vorzugsweise in Gruppen zusammengefaßt, in lösbarer Verbindung an der Walze (50) befestigt sind.

13. Vorrichtung nach Anspruch 12, **dadurch gekennzeichnet, daß** die lösbare Verbindung der Durchstoßelemente (52) mehrere im Umfangswinkelabstand an der Walze (50) angeordnete Sockelelemente (53) umfaßt, die vorzugsweise als mit der Walzenachse (500) sich achsparallel erstreckende Leistenelemente vorgesehen sind, wobei die Sockelelemente (53) die Durchstoßelemente (52) verankern, in formschlüssiger Verbindung am Walzenumfang befestigt sind und zweckmäßig in der Sockelform entsprechende Paßnuten (54), vorzugsweise in achsparallele Längsnuten an der Walze (50), eingelassen sind.

14. Vorrichtung nach einem der Ansprüche 10 bis 13, **dadurch gekennzeichnet, daß** die Durchstoßelemente (52) zur Herstellung eines gleichmäßigen Durchlochungsmusters regelmäßig am Walzenumfang angeordnet sind.

15. Vorrichtung nach einem der Ansprüche 10 bis 14, **dadurch gekennzeichnet, daß** die Führungseinrichtung (3) die Durchlochungseinrichtung (5) in Form einer zur flächigen Bahnzusammenführung vorgesehenen, mit Durchlochungsmitteln ausgestatteten ersten Umlenkwalze (50) umfaßt.

16. Vorrichtung nach Anspruch 15, **dadurch gekennzeichnet, daß** die Durchlochungs-Umlenkwalze (50) zusammen mit einer zweiten Umlenkwalze (31) der Führungseinrichtung (3) angeordnet ist, wobei die beiden Umlenkwalzen (50, 31) so angeordnet sind, daß die durchlöcherte Bahn (14) die beiden Walzen (50, 31) in S-förmigem Verlauf passiert und in einem Bereich der zweiten Umlenkwalze (31) an der ersten Bahn (13) anliegt.

17. Vorrichtung nach einem der Ansprüche 10 bis 16, **dadurch gekennzeichnet, daß** die Durchlochungseinrichtung (5) mit ihren Durchstoßelementen (52) so angeordnet und ausgebildet ist, daß an der Lochbahn-Flächenseite, die der mit der Lochbahn (14) zu verklebenden ersten Bahn (13) zugewandt ist, Lochränder aus dem Material der mit den Durchstoßelementen (52) aufgerissenen lochartigen Öffnungen (141) gebildet werden.

18. Vorrichtung nach einem der Ansprüche 9 bis 17, **dadurch gekennzeichnet, daß** die Vorrichtung (11) eine zweckmäßig als Heizwalze (41) ausgebildete Heizeinrichtung (4) umfaßt, die zur Wärme-Klebeverbindung der beiden mittels des Klebemittels aneinander liegenden Bahnen (13, 14) vorgesehen ist.

19. Vorrichtung nach Anspruch 18, **dadurch gekennzeichnet, daß** die Heizeinrichtung (4) eine Heizwalze (41) umfaßt, die so angeordnet ist, daß die lochfreie erste Bahn (13) der zur Klebung zusammengeführten Bahnen (13, 14) in einem Walzenanlagebereich, vorzugsweise mit einem größer als 180° vorgesehenen Umschlingungswinkel, an der Heizwalze (41) anliegt.

20. Vorrichtung (1) zum Herstellen von Wellpappe (10.4) durch Zusammenkleben von wenigstens zwei bewegten Bahnen (13, 14), durch Bilden einer Wellenbahn (10.3) aus der zusammengeklebten Verbundbahn (10.2) und durch Verbinden der Wellenbahn (10.3) mit wenigstens einer weiteren, insbesondere glatten Bahn (15), **dadurch gekennzeichnet, daß** die Wellpappe-Herstellungsvorrichtung (1) eine Klebevorrichtung (11) nach einem der Ansprüche 9 bis 19 zum Zusammenkleben der mit Wellung zu versehenden Verbundbahn (10.2) umfaßt.

21. Vorrichtung nach Anspruch 19, **dadurch gekennzeichnet, daß** die Wellpappe-Herstellungsvorrichtung (1) eine Wellungseinrichtung (6) mit zwei in Prägeeingriff stehenden Riffelwalzen (61, 62) zur Wellung der Verbundbahn (10.2) umfaßt, wobei wenigstens eine Riffelwalze (61) Saugöffnungen, insbesondere Vakuumschlitze, zum Herstellen von Saugkontakt zwischen der Verbundbahn (10) und der Riffelwalze (61) aufweist.

22. Vorrichtung nach Anspruch 20 oder 21, **dadurch gekennzeichnet, daß** die Wellpappe-Herstellungseinrichtung (1) eine Einrichtung (7) zum Ankleben einer einseitig abdeckenden, insbesondere glatten Deckenbahn (15) an die Wellenbahn (10.3) umfaßt, wobei die Anklebeeinrichtung (7) so angeordnet ist, daß die abdeckende Bahn (15) an die durchlochte Bahn (14) der Wellenbahn (10.3) angeklebt wird.

## Claims

1. Method of gluing together webs (13, 14) of fibrous sheet material, such as paper, moving towards one another, the webs (13, 14) being brought together in one plane and glued together in that adhesive is applied to the flat side of at least a first web (13) and the flat side of a second web (14) is brought to bear against the flat side of the first web (13) for gluing, **characterised in that** at least one of the two webs (13, 14) in the form of a web (14) provided with a plurality of initially adhesive-free, perforation-like openings (141) is brought into contact with the adhesive in one plane and is brought together with the other web (13) for gluing, the openings (141) being such that fluid constituents of the bonded joint produced between the adjacent webs (13, 14) escape.

2. Method according to claim 1, **characterised in that** adhesive is applied to the first web (13) provided as a perforation-free web and the second web (14) with perforation-like openings (141) is brought adhesive-free towards the first web (13) for gluing.

3. Method according to claim 2, **characterised in that** the second web (14) initially in the form of a perforation-free web is brought towards the first web (13) and is then provided with the perforation-like openings (141) before it is brought to bear against the first web (13) for gluing.

4. Method according to claim 3, **characterised in that** the perforation-like openings (141) are introduced into the second web (14) immediately before the two webs (13, 14) are brought together in one plane.

5. Method according to one of claims 2 to 4, **characterised in that** the second web (14) is guided in an S-shaped manner in a region defined by a path portion immediately ahead of the point at which the webs are brought together and a directly adjacent path portion of the adjacent webs (13, 14).

6. Method according to one of claims 1 to 5, **characterised in that** the webs (13, 14) bearing against one another by means of adhesive are guided about a heating roll (41) of a heating means preferably with an angle of contact of more than 180° for thermal bonding, a perforation-free first web (13) being brought to bear against the circumferential surface of the heating roll (41).

7. Method according to one of claims 1 to 6, **characterised in that** two webs (13, 14) to be glued together are guided in such a manner that perforation-like web openings (141) with toric edges each formed from web material released from each opening (141) are directed towards the other web (13).

8. Method according to one of claims 1 to 7, **characterised in that** at least two webs (13, 14) glued together to form the composite web (10.2) are corrugated by embossing in order to produce corrugated board, a web (15) covering the corrugated composite web (10.2) preferably being glued on to a web (14) provided with the perforation-like openings (141).

9. Device (11) for gluing together webs (13, 14) of fibrous sheet material, such as paper, moving towards one another for carrying out the method according to one of claims 2 to 8, including a gluing means (2) for applying adhesive to one flat side of a first web (13) and a guide means (3) for bringing the webs together in one plane, a second web (14) coming to bear by means of one flat side against the flat side of the first web (13) provided with adhesive, **characterised in that** the device (11) has a perforating means (5) arranged on the adhesive-free second web (14) not yet brought together with the first web (13) and designed in such a manner that it produces a plurality of perforation-like openings (141) on the adhesive-free second web (14), these being provided in order to allow fluid constituents of the bonded joint produced between the adjacent webs to escape.

10. Device according to claim 9, **characterised in that** the perforating means (5) includes a rotating roll (50) with piercing elements (52) projecting from the roll surface (51) and engaging the second web (14) in order to produce the perforations.

11. Device according to claim 10, **characterised in that** the piercing elements (52) are pin-shaped elements with distinct needle-like points designed in such a manner that only fine pinpoints produce perforations in the second adhesive-free web (14).

12. Device according to claim 10 or claim 11, **characterised in that** the piercing elements (52), preferably assembled in groups, are fixed to the roll (50) by a releasable connection.

13. Device according to claim 12, **characterised in that** the releasable connection of the piercing elements (52) includes a plurality of base elements (53) arranged at angular intervals over the circumference of the roll (50) and preferably provided as bar elements extending in an axially parallel manner with the roll axis (500), the base elements (53) anchoring the piercing elements (52), being fixed to the circumference of the roll by a positive connection and advantageously being inserted into fitting grooves (54) corresponding to the shape of the base, preferably into axially parallel longitudinal grooves in the roll (50).

14. Device according to one of claims 10 to 13, **characterised in that** the piercing elements (52) are arranged regularly over the circumference of the roll in order to produce a uniform perforation pattern.

15. Device according to one of claims 10 to 14, **characterised in that** the guide means (3) includes the perforating means (5) in the form of a first deflector roll (50) provided with perforating aids and provided for bringing the webs together in one plane.

16. Device according to claim 15, **characterised in that** the perforating deflector roll (50) is arranged together with a second deflector roll (31) of the guide means (3), the two deflector rolls (50, 31) being arranged in such a manner that the perforated web (14) passes through the two rolls (50, 31) in an S-shaped manner and bears against the first web (13) in a region of the second deflector roll (31).

17. Device according to one of claims 10 to 16, **characterised in that** the perforating means (5) with its piercing elements (52) is arranged and designed in such a manner that perforation edges are formed from the material of the perforation-like openings (141) torn out by the piercing elements (52) on the flat side of the perforated web directed towards the first web (13) to be bonded to the perforated web (14).

18. Device according to one of claims 9 to 17, **characterised in that** the device (11) includes a heating means (4) advantageously designed as a heating roll (41) provided for thermal bonding of the two webs (13, 14) bearing against one another by means of the adhesive.

19. Device according to claim 18, **characterised in that** the heating means (4) includes a heating roll (41 ) arranged in such a manner that the perforation-free first web (13) of the webs (13, 14) brought together for gluing bears against the heating roll (41 ) in a roll bearing region, preferably with an angle of contact of more than 180°.

20. Device (1) for producing corrugated board (10.4) by gluing together at least two moving webs (13, 14) by forming a corrugated web (10.3) from the composite web (10.2) glued together and by joining the corrugated web (10.3) to at least one further, in particular, smooth web (15), **characterised in that** the device (1) for producing corrugated board includes a gluing device (11) according to one of claims 9 to 19 for gluing together the composite web (10.2) to be provided with corrugation.

21. Device according to claim 19, **characterised in that** the device (1) for producing corrugated board includes a corrugating means (6) with two corrugated rolls (61, 62) engaged for embossing in order to corrugate the composite web (10.2), at least one corrugated roll (61) having suction openings, in particular, vacuum slots in order to produce suction contact between the composite web (10) and the corrugated roll (61).

22. Device according to claim 20 or claim 21, **characterised in that** the means (1) for producing corrugated board includes a means (7) for gluing an, in particular, smooth covering web (15) covering one side on to the corrugated web (10.3), the gluing means (7) being arranged in such a manner that the covering web (15) is glued on to the perforated web (14) of the corrugated web (10.3).

## Revendications

1. Procédé d'assemblage par collage de bandes (13, 14) de matière fibreuse en feuilles, telle que du papier, qui sont en mouvement l'une sur l'autre, les bandes (13, 14) étant assemblées à la surface l'une de l'autre et étant collées l'une à l'autre en appliquant une colle sur la face d'au moins une première bande (13) et en plaquant la face d'une deuxième bande (14) sur la face de la première bande (13) en vue d'obtenir un produit contrecollé, **caractérisé en ce que** au moins l'une des deux bandes (13, 14), se présentant sous la forme d'une bande (14), qui est dotée d'une pluralité d'ouvertures (141) de type perforations préalablement dépourvues de colle, est mise en contact superficiellement avec la colle et est assemblée à l'autre bande (13) en vue d'obtenir un produit contrecollé et les ouvertures (141) sont conformées de façon à chasser les composants fluides de la liaison par collage réalisée entre les bandes (13, 14) placées l'une sur l'autre.

2. Procédé selon la revendication 1, **caractérisé en ce qu'**une colle est appliquée sur la première bande (13) prévue comme bande dépourvue de perforations et la deuxième bande (14) dotée d'ouvertures (141) de type perforations est amenée sans colle sur la première bande (13) pour donner un produit contrecollé.

3. Procédé selon la revendication 2, **caractérisé en ce que** la deuxième bande (14) est tout d'abord amenée, sous la forme d'une bande dépourvue de perforations, sur la première bande (13) puis est dotée d'ouvertures (141) de type perforations avant de l'amener sur la première bande (13) pour donner le produit contrecollé.

4. Procédé selon la revendication 3, **caractérisé en ce que** les ouvertures (141) de type perforations sont ménagées dans la deuxième bande (14) immédiatement avant d'assembler les deux bandes (13, 14) à la surface l'une de l'autre.

5. Procédé selon l'une des revendications 2 à 4, **caractérisé en ce que** la deuxième bande (14) est guidée en S dans une région qui est définie par une portion de trajet précédant immédiatement l'assemblage des bandes et une portion de trajet, se raccordant immédiatement à la portion de trajet précédente, des bandes (13, 14) placées l'une sur l'autre.

6. Procédé selon l'une des revendications 1 à 5, **caractérisé en ce que** les bandes (13, 14) placées l'une sur l'autre au moyen d'une colle sont guidées autour d'un cylindre chauffant (41) d'une unité de chauffage avantageusement avec un angle de contact supérieur à 180° en vue de réaliser une liaison par thermocollage, une première bande (13) dépourvue de colle étant appliquée contre la surface périphérique du cylindre chauffant (41).

7. Procédé selon l'une des revendications 1 à 6, **caractérisé en ce que**, entre les bandes (13, 14) placées l'une sur l'autre, des ouvertures (141) de type perforations, ménagées dans la bande et comportant des bords en forme de bourrelet qui sont formés à partir d'un matériau de bande libérant chaque ouverture (141), sont dirigées vers l'autre bande (13).

8. Procédé selon l'une des revendications 1 à 7, **caractérisé en ce que** au moins deux bandes contrecollées (13, 14) donnant une bande composite (10.2) sont ondulées en vue de fabriquer du carton ondulé par gaufrage, une bande (15) recouvrant la bande composite ondulée (10.2) étant collée avantageusement sur une bande (14) dotée d'ouvertures (141) de type perforations.

9. Dispositif (11) d'assemblage par collage de bandes (13, 14) de matière fibreuse en feuilles, telle que du papier, qui sont en mouvement l'une sur l'autre en vue de mettre en oeuvre le procédé selon l'une des revendication 2 à 8, ledit dispositif comportant une unité de collage (2) destinée à appliquer une colle sur l'une des faces d'une première bande (13) et une unité de guidage (3) destinée à assembler les bandes à la surface l'une de l'autre, l'une des faces de la deuxième bande (14) venant se placer sur la face de la première bande (13) qui est dotée d'une colle, **caractérisé en ce que** le dispositif (11) comporte une unité de perforation (5) qui est agencée sur la deuxième bande (14) dépourvue de colle et non encore assemblée à la première bande (13) et qui est conformée de façon à réaliser sur la deuxième bande (14) dépourvue de colle une pluralité d'ouvertures (141) de type perforations qui sont prévues en tant que telles pour pouvoir chasser des composants fluides de la liaison par collage réalisée entre les bandes placées l'une sur l'autre.

10. Dispositif selon la revendication 9, **caractérisé en ce que** l'unité de perforation (5) est formée par un cylindre rotatif (50) destiné à réaliser les perforations et comportant des éléments de perforation (52) saillant au niveau de l'enveloppe (51) du cylindre et s'engageant dans la deuxième bande (14).

11. Dispositif selon la revendication 10, **caractérisé en ce que** les éléments de perforation (52) sont des éléments en forme de tige dotés de pointes saillantes de type aiguilles qui sont conformées de façon à ne réaliser que des perforations très fines dans la deuxième bande (14) dépourvue de colle.

12. Dispositif selon la revendication 10 ou 11, **caractérisé en ce que** les éléments de perforation (52), avantageusement rassemblées par groupes, sont fixés au cylindre (50) dans une liaison amovible.

13. Dispositif selon la revendication 12, **caractérisé en ce que** la liaison amovible des éléments de perforation (52) comporte plusieurs éléments d'embase (53) qui sont agencés à une distance angulaire périphérique sur le cylindre (50) et qui sont prévus avantageusement comme éléments en forme de baguette s'étendant parallèlement à l'axe de cylindre (500), les éléments d'embase (53) réalisent l'ancrage des éléments de perforation (52), sont fixés à la périphérie du cylindre par une liaison à verrouillage de forme et sont encastrés de façon appropriée dans des rainures d'ajustage (54) correspondant à la forme des embases, avantageusement dans des rainures longitudinales parallèles à l'axe sur le cylindre (50).

14. Dispositif selon l'une des revendications 10 à 13, **caractérisé en ce que** les éléments de perforation (52) sont agencés régulièrement à la périphérie en vue de fabriquer d'un motif de perforation uniforme.

15. Dispositif selon l'une des revendications 10 à 14, **caractérisé en ce que** l'unité de guidage (3) comporte l'unité de perforation (5) se présentant sous forme d'un premier cylindre de déviation (50) prévu pour assembler les bandes à la surface l'une de l'autre et équipé de moyens de perforation.

16. Dispositif selon la revendication 15, **caractérisé en ce que** le cylindre de déviation et de perforation (50) est agencé conjointement avec le deuxième cylindre de déviation (31) du dispositif de guidage (3), les deux cylindres de déviation (50, 31) étant agencés de telle sorte que la bande perforée (14) passe en S autour des deux cylindres (50, 31 ) et porte contre la première bande (13) dans une région du deuxième cylindre de déviation (31).

17. Dispositif selon l'une des revendications 10 à 16, **caractérisé en ce que** l'unité de perforation (5) dotée de ses éléments de perforation (52) est agencée et conformée de telle sorte que, sur la face de la bande perforée qui est dirigée vers la première bande (13) à contrecoller sur la bande perforée (14), des bords de perforation sont formés à partir du matériau des ouvertures (141) de type perforations ménagées avec les éléments de perforation (52).

18. Dispositif selon l'une des revendications 9 à 17, **caractérisé en ce que** le dispositif (11) comporte une unité de chauffage (4) qui est conformée de façon appropriée en cylindre chauffant (41 ) et qui est prévue pour réaliser la liaison par thermocollage des deux bandes (13, 14) placées l'une sur l'autre au moyen de la colle.

19. Dispositif selon la revendication 18, **caractérisé en ce que** l'unité de chauffage (4) comporte un cylindre chauffant (41) qui est agencé de telle sorte que la première bande (13) dépourvue de colle des bandes (13, 14) assemblées en vue du collage porte, au niveau de l'ensemble de cylindres, contre le cylindre chauffant (41) avec un angle de contact supérieur à 180°.

20. Dispositif (1) de fabrication de carton ondulé (10.4) en assemblant par collage au moins deux bandes (13, 14) en mouvement, en formant un bande ondulée (10.3) à partir de la bande composite (10.2) assemblée par collage et en reliant la bande ondulée (10.3) à au moins une autre bande (15), en particulier lisse, **caractérisé en ce que** le dispositif de fabrication de carton ondulé (1) comporte un dispositif de collage (11) selon l'une des revendication 9 à 19 destiné à assembler par collage la bande composite (10.2) doté d'une ondulation.

21. Dispositif selon la revendication 19, **caractérisé en ce que** le dispositif de fabrication de carton ondulé (1) comporte une unité d'ondulation (6) comportant au moins deux cylindres cannelés (61, 62) en engagement de gaufrage en vue d'onduler la bande composite (10.2), et au moins un cylindre cannelé (61) comportant des ouvertures d'aspiration, en particulier des fentes de dépression, en vue de réaliser un contact par aspiration entre la bande composite (10) et le cylindre cannelé (61).

22. Dispositif selon la revendication 20 ou 21, **caractérisé en ce que** le dispositif de fabrication de carton ondulé (1) comporte une unité (7) destinée à appliquer une colle sur une bande (15), en particulier lisse, de recouvrement unilatéral de la bande ondulée (10.3), et le dispositif d'application de colle (7) étant agencé de telle sorte que la bande de recouvrement (15) est contrecollée sur la bande perforée (14) de la bande ondulée (10.3).
